# EUROPÄISCHE PATENTANMELDUNG

(11) **EP 1 157 889 A2**
(43) Veröffentlichungstag der Anmeldung: **28.11.2001**
(21) Anmeldenummer: 01112377.5
(22) Anmeldetag: 21.05.2001
(51) Int. Cl.: B60Q 1/52

(54) **Warnvorrichtung für Fahrzeuge**

(30) Priorität: 20.05.2000 DE 20009138 U
(71) Anmelder: Hagmeier, Georg, 73340 Schalkstetten (DE)
(72) Erfinder: Hagmeier, Georg, 73340 Schalkstetten (DE)
(74) Vertreter: Raible, Hans, Dipl.-Ing.

(57) **Zusammenfassung**

Es handelt sich um eine Warnvorrichtung für ein Fahrzeug. Diese hat eine Warnleuchte (14) und einen ihr zugeordneten Geber (32) zum Versorgen der Warnleuchte (14) mit Stromimpulsen. Auf dem Fahrzeug (100) ist ein Abstandssensor (102, 104) vorgesehen, welcher dazu dient, abhängig vom erfassten Abstand (a) des Fahrzeugs (100) zu einem anderen Fahrzeug (106) diesen Geber (32) zu aktivieren und/oder zu deaktivieren. Bevorzugt wird die zeitliche Ableitung des Abstands (a) verwendet, um den Geber ab einer bestimmten Größe dieser Ableitung zu aktivieren.

## Beschreibung

Die Erfindung betrifft eine Warnvorrichtung für ein Fahrzeug.

Aus der WO98/32633 (Georg Hagmeier) kennt man eine Warnvorrichtung für ein Fahrzeug. Diese Wamvorrichtung hat sehr vorteilhafte Eigenschaften. Jedoch sind die Möglichkeiten ihrer Bedienung durch den Fahrer noch nicht in allen Punkten zufriedenstellend.

Es ist deshalb eine Aufgabe der Erfindung, eine neue Warnvorrichtung bereitzustellen.

Nach der Erfindung wird diese Aufgabe gelöst durch den Gegenstand des Anspruchs 1. Dies ermöglicht mit sehr einfachen Mitteln ein selektives Abschalten der zusätzlichen Warnleuchte, wie das z.B. beim Abschleppen eines havarierten Fahrzeugs erwünscht ist. Der Abschaltvorgang verhindert jedoch nicht, dass die Warnblinkanlage anschließend neu eingeschaltet wird.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Ansprüchen. Es zeigt:
- Fig. 1: eine Übersichtsdarstellung zur Erläuterung der Erfindung,
- Fig. 2: ein bevorzugtes Ausführungsbeispiel einer erfindungsgemäßen Anordnung, welche ein selektives Abschalten einer zusätzlichen Warnleuchte bei allen Betriebsbedingungen ermöglicht,
- Fig. 3: eine Variante zu Fig. 2, und
- Fig. 4: eine bevorzugte Ausführungsform einer Sensoranordnung.

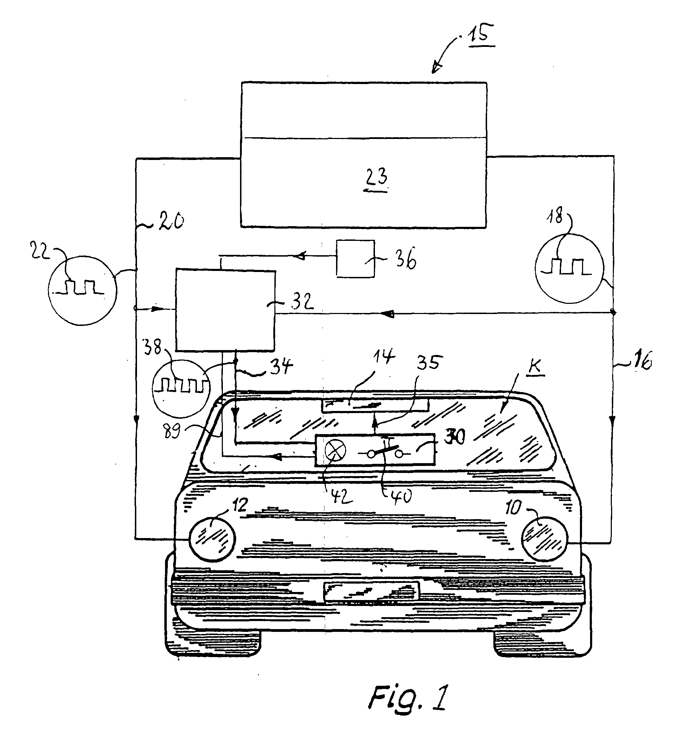

Fig. 1 zeigt eine rechte Blinkleuchte 10 und eine linke Blinkleuchte 12 eines Kraftfahrzeugs K, ferner eine zusätzliche Warnleuchte 14, hier in Form einer Heckwarnblinkleuchte dargestellt, die typisch am Rückfenster des Fahrzeugs angeordnet ist, aber naturgemäß auch an einer anderen geeigneten Stelle eines Fahrzeugs angeordnet sein kann. Diese wird in einer Gefahrensituation automatisch aktiviert und warnt dann den nachfolgenden oder auch entgegenkommenden Verkehr, um Unfälle zu verhindern. Hierzu wird hingewiesen auf den gesamten Inhalt der WO98/32633 vom 30. Juli 1998, wo eine derartige Anordnung ausführlich beschrieben ist. Bei einem Anhänger oder einem sonstigen Fahrzeug können z.B. an allen Seiten des Fahrzeugs entsprechende Warnleuchten 14 vorgesehen sein.

Die rechte Blinkleuchte 10 erhält von einem Geber 15 über eine Leitung 16 Strom in Form von Stromimpulsen 18, z.B. wenn das Fahrzeug nach rechts fährt und der Fahrer das anzeigen will.

Ebenso erhält die linke Blinkleuchte 12 vom Geber 15 über eine Leitung 20 Strom in Form von Stromimpulsen 22, z.B. beim Betätigen des Blinkers nach links.

In keinem dieser beiden Fälle darf die zusätzliche Signalleuchte 14 betätigt werden, die sich gewöhnlich in der Mitte des Fahrzeugs befindet, da dies den nachfolgenden Verkehr verwirren würde und deshalb unzulässig ist.

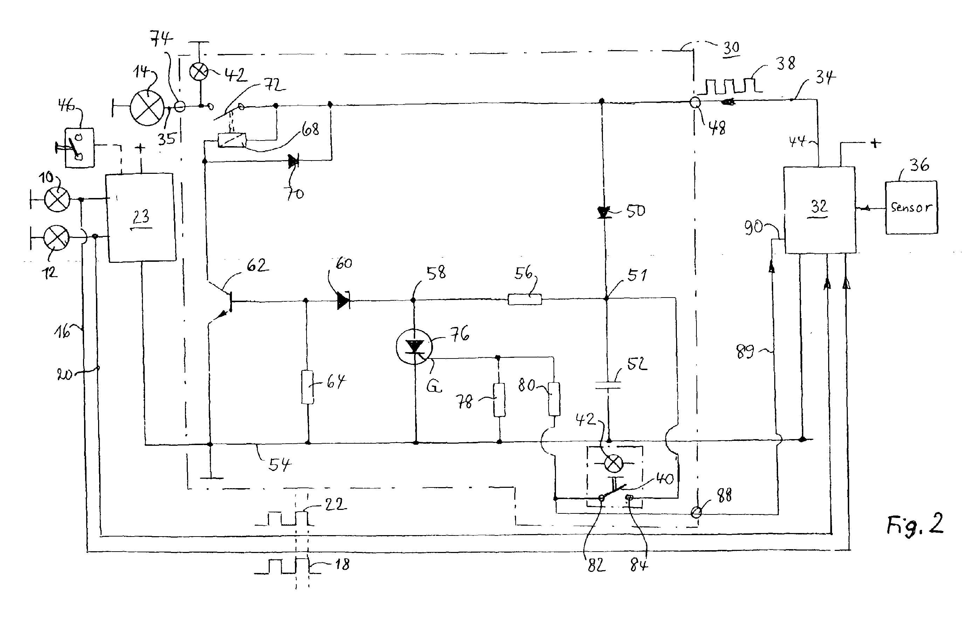

Bei einem Warnblinkvorgang kommen sowohl auf der Leitung 16 wie auf der Leitung 20 synchrone, phasengleiche Impulse 18, 22, vgl. Fig. 2, von einer Warnblinkanlage 23 (im Geber 15), und in diesem Fall soll auch die zusätzliche Signalleuchte 14 betätigt werden, um Lichtsignale abzugeben und eine zusätzliche Warnung für den nachfolgenden oder entgegenkommenden Verkehr bereitzustellen. (Ggf. kann auch eine Mehrzahl zusätzlicher Warnleuchten verwendet werden, besonders an der Vorderseite des Fahrzeugs, da nach einem Unfall das Fahrzeug oft in umgekehrter Richtung auf der Straße stehen wird.)

Hierzu ist ein Geber 32 vorgesehen, welcher bei gleicher Phasenlage der Impulse 18, 22 diese über eine Abschaltvorrichtung 30 der zusätzlichen Warnleuchte 14 zuführt, so dass diese bei einem Warnblinkvorgang automatisch zusätzlich betätigt wird.

Der Geber wird außerdem bei einer vorgegebenen Gefahrensituation automatisch eingeschaltet, z.B. durch einen Verzögerungssensor 36, und führt dann über eine Leitung 34, die Abschaltvorrichtung 30 und eine Leitung 35 der zusätzlichen Warnleuchte 14 Impulse 38 mit erhöhter Frequenz zu.

Wichtig ist es, die zusätzliche Warnleuchte 14 bei Bedarf selektiv abschalten zu können, d.h.
a) wenn diese bei Gleichphasigkeit der Impulse 18, 22 betätigt wird, oder
b) wenn diese vom Geber 32 höherfrequente Impulse 38 erhält, nachdem der Geber 32 durch den Sensor eingeschaltet worden ist.

Wenn z.B. bei der Panne eines anderen Fahrzeugs das Fahrzeug K zum Abschleppen verwendet wird, möchte man gerne die Warnblinkanlage 23 betätigen, aber ohne die zusätzliche Warnleuchte 14, weil diese den Fahrer des abgeschleppten Fahrzeugs blenden würde. Wichtig ist jedoch, dass nach einem solchen Deaktivieren der Warnleuchte 14 diese erneut automatisch aktiviert werden, z.B., wenn der Sensor 36 den Geber 32 einschaltet, oder wenn über den Schalter 46 die Warnblinkanlage 23 zuerst abgeschaltet und dann erneut eingeschaltet wird.

Die Abschaltvorrichtung 30 soll deshalb in einfacher Weise ein manuelles Abschalten der zusätzlichen Warnleuchte 14 ermöglichen, bevorzugt direkt vom Fahrersitz aus, und sie soll auch leicht montierbar sein, d.h. mit einem Minimum an Verbindungsleitungen, um eine nachträgliche Montage zu erleichtern. Die Abschaltvorrichtung 30 hat zu diesem Zweck einen Drucktaster 40 mit einer Kontrollleuchte 42, welche leuchtet, solange die zusätzliche Warnleuchte 14 aktiviert ist und welche erlischt, wenn die Warnleuchte 14 abgeschaltet ist. Hierzu ist die Kontrollleuchte 42 parallel zur zusätzlichen Warnleuchte 14 geschaltet, blinkt also im gleichen Rhythmus wie diese. In Fig. 2 ist die Kontrollleuchte 42 doppelt dargestellt, nämlich einmal oben links, und zum anderen symbolisch beim Drucktaster 40.

Wie Fig. 2 zeigt, erzeugt der Geber 32 an seinem Ausgang 44 Impulse 38. Wenn an den Leitungen 16 und 20 synchrone Impulse 18, 22 vorliegen, d.h. wenn die Warnblinkanlage 23 mittels des Schalters 46 aktiviert worden ist, haben die Impulse 38 die Frequenz der Impulse 18, 22. Diese Betriebsart hat Vorrang, vgl. die eingangs genannte WO-Schrift.

Wird der Geber 32 von einem Sensor 36 aktiviert, z.B. durch einen Zusammenstoß, so erzeugt der Geber 32 Impulse 38 mit einer höheren Frequenz.

Die Impulse vom Geber 32 werden einem Eingang 48 der Abschaltvorrichtung 30 und dort über eine Diode 50 und einen Knotenpunkt 51 einem Speicherkondensator 52 zugeführt, dessen anderer Anschluss an Masse 54 angeschlossen ist, so dass sich der Kondensator 52 etwa auf die Batteriespannung des Fahrzeugs K auflädt, wenn vom Geber 32 Impulse 38 erzeugt werden.

Der Knotenpunkt 51 ist über einen Widerstand 56, einen Knotenpunkt 58 und eine Z-Diode 60 mit der Basis eines npn-Transistors 62 verbunden, die über einen Widerstand 64 mit Masse 54 verbunden ist, an die auch der Emitter des Transistors 62 angeschlossen ist.

Der Kollektor des Transistors 62 ist über eine Relaisspule 68, zu der eine Freilaufdiode 70 parallelgeschaltet ist, mit dem Anschluss 48 verbunden. Das Relais 68 hat einen Kontakt 72, der geöffnet ist, solange das Relais 68 keinen Strom erhält, und der im geschlossenen Zustand den Anschluss 48 mit einem Ausgang 74 der Abschaltvorrichtung 30 verbindet. An den Anschluss 74 ist die zusätzliche Warnleuchte 14 angeschlossen, und intern die Kontrollleuchte 42.

Mit dem Knotenpunkt 58 ist die Anode eines Thyristors 76 verbunden, dessen Kathode an Masse 54 angeschlossen ist. Das Gate G des Thyristors 76 ist über einen Widerstand 78 mit Masse und über einen Widerstand 80 mit dem Anschluss 82 des Drucktasters 40 verbunden, dessen Anschluss 84 mit dem Knotenpunkt 51 verbunden ist.

Der Anschluss 82 ist außerdem mit einem Ausgang 88 der Abschaltvorrichtung 30 verbunden, der über eine Leitung 89 an einen Steuereingang 90 des Gebers 32 angeschlossen ist. Ist der Geber 32 durch den Sensor 36 aktiviert, so dass er höherfrequente Impulse erzeugt, z.B. nach einem Zusammenstoß, so bewirkt ein positives Signal am Steuereingang 90, dass der Geber 32 deaktiviert wird und folglich keine Impulse 38 mehr erzeugt.

### Arbeitsweise

Wenn am Ausgang 44 des Gebers 32 keine Spannungsimpulse 38 auftreten, ist der Schalter 72 geöffnet und die Warnleuchte 14 sowie die Kontrollleuchte 42 erhalten keinen Strom.

Treten am Ausgang 44 Impulse 38 auf, so laden diese über die Diode 50 den Speicherkondensator 52 auf, z.B. auf 12 V. Dadurch wird die Z-Diode 60 leitend, und es fließt ein Basisstrom zum Transistor 62 und macht diesen leitend, so dass ein Strom zur Relaisspule 68 fließt und der Kontakt 72 geschlossen wird. Dadurch werden die Impulse 38 zur Warnleuchte 14 und zur Kontrollleuchte 42 geleitet, so dass beide Leuchten blinken.

Sofern die Warnblinkanlage 23 aktiviert ist, blinken also die Leuchten 10, 12, 14 und 42 im gleichen Takt. Wurde der Geber 32 durch den Sensor 36 aktiviert, so blinken nur die Leuchten 14 und 42, aber bevorzugt mit einer höheren Frequenz, um auf die erhöhte Gefahrensituation aufmerksam zu machen.

Soll die Warnleuchte 14 selektiv abgeschaltet werden, so wird der Drucktaster 40 kurzzeitig betätigt. Dadurch erhält der Steuereingang 90 des Gebers 32 ein positives Signal, was den Geber 32 deaktiviert, falls er zuvor aktiviert war.

Ferner erhält das Gate G des Thyristors 76 einen positiven Impuls, welcher den Thyristor 76 ständig leitend macht, so dass dieser über den Widerstand 56 den Kondensator 52 entlädt. Dadurch sperrt die Z-Diode 60, der Transistor 62 wird nichtleitend, die Relaisspule 68 wird stromlos, und der Kontakt 72 wird geöffnet, so dass etwaige Impulse 38 vom Geber 32 nicht mehr zur zusätzlichen Wamleuchte 14 weitergeleitet werden, weil der Thyristor 76 leitend bleibt und sich deshalb am Kondensator 52 keine genügend hohe Spannung mehr aufbauen kann.

Gleichzeitig erlischt hierdurch die Kontrollleuchte 42 und gibt eine visuelle Quittung dafür, dass der Befehl ausgeführt worden ist.

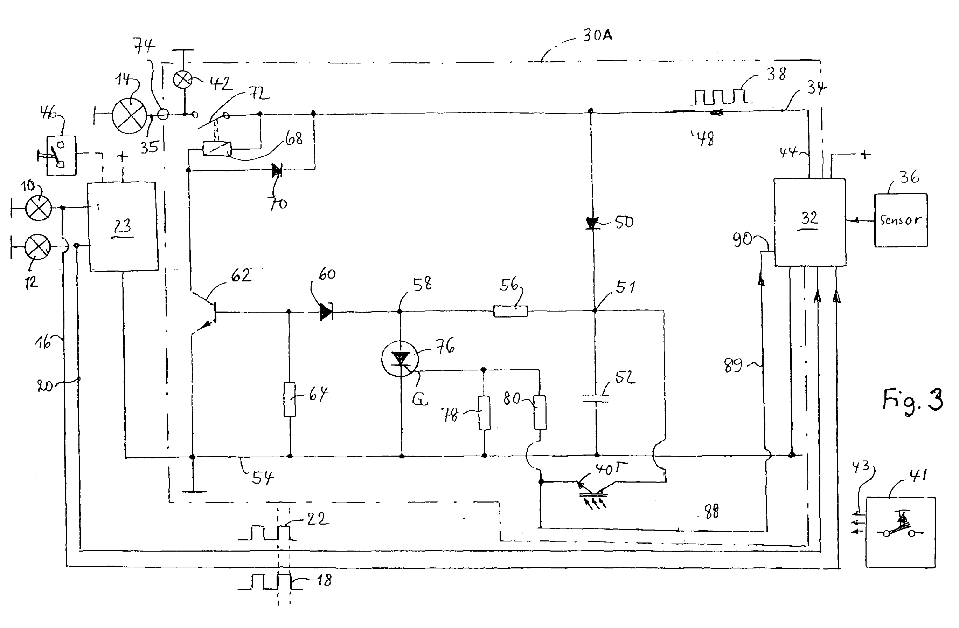

Fig. 3 zeigt eine Variante zu Fig. 2. Hierbei ist der manuell betätigbare Schalter 40 der Fig. 2 ersetzt durch einen Fototransistor 40T, welcher von einem manuell betätigbaren separaten Gerät 41 mittels eines Infrarotsignals 43 aktivierbar ist. Der Rest der Schaltung gemäß Fig. 3 ist gegenüber Fig. 2 unverändert und wird deshalb nicht nochmals beschrieben. Die Abschaltvorrichtung 30A ist bei Fig. 3 bevorzugt eine Komponente des Gebers 32 und in diesen integriert, ggf. zusammen mit der zusätzlichen Warnleuchte 14. Eine solche integrierte Bauweise erleichtert die Montage in hohem Maße.

Wird der Fototransistor 40T durch das Gerät 41 leitend gesteuert, so erhält das Gate G ein positives Signal vom Knotenpunkt 51, so dass der Thyristor 76 dauerhaft leitend wird und den Kondensator 52 so weit entlädt, dass die Z-Diode 60 sperrt und der Transistor 62 nichtleitend wird. Hierdurch wird die Relaisspule 68 stromlos, und der Schalter 72 wird geöffnet, so dass die zusätzliche Warnleuchte 14 so lange deaktiviert wird, wie Impulse 38 am Ausgang 44 des Gebers 32 erzeugt werden.

Vorteilhaft ist hierbei, dass über das Gerät 41 eine drahtlose Fernsteuerung möglich ist; dasselbe wäre selbstverständlich über eine Funkverbindung möglich, z.B., um bei einem Lastzug eine zusätzliche Warnleuchte an einem Anhänger vom Fahrerhaus aus selektiv zu deaktivieren.

Als Sensor 36 eignet sich z.B. die Anordnung, die in der DE 196 02 428 A1 beschrieben ist und die auf Verzögerungen ab einer bestimmten Größe anspricht. Gewöhnlich wird man in einer solchen Anordnung eine Mehrzahl von Sensoren verwenden, in der Weise, dass das Ansprechen wenigstens eines Sensors den Geber 32 automatisch aktiviert.

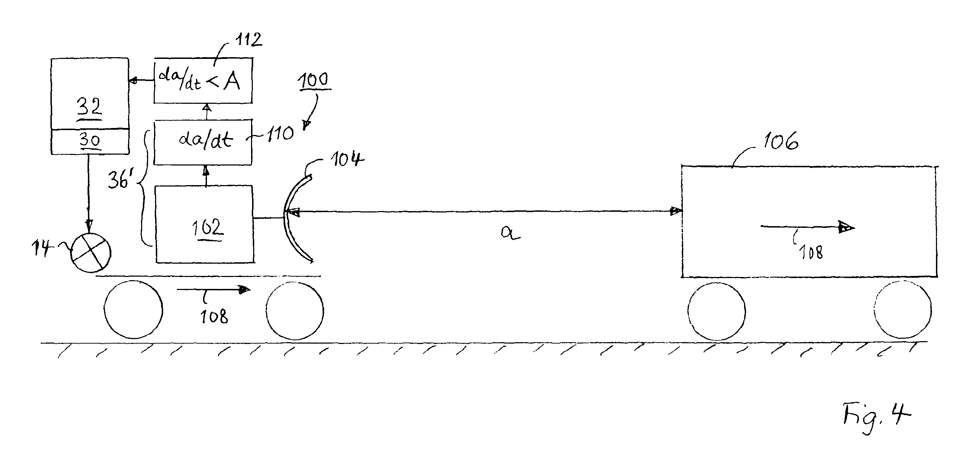

Fig. 4 zeigt schematisch ein Fahrzeug 100 mit einem Abstandsradar 102, und einer Sende-/Empfangsantenne 104, mittels deren fortlaufend der Abstand a zu einem vorausfahrenden Fahrzeug 106 gemessen wird. Beide Fahrzeuge 100, 106 bewegen sich in derselben Fahrtrichtung 108.

In einem Differenzierglied 110 wird der Wert da/dt gebildet, und in einem Glied 112 wird geprüft, ob da/dt kleiner als ein vorgegebener Grenzwert A ist.

Bremst z.B. das vordere Fahrzeug 106, nicht aber das Fahrzeug 100, so wird da/dt stark negativ und dadurch kleiner als der Wert A.

In diesem Fall gibt das Glied 112 ein Signal an den Geber 32, aktiviert diesen, und dadurch wird die zusätzliche Warnleuchte 14 aktiviert, blinkt, und warnt den nachfolgenden Verkehr.

Die Aktivierung des Gebers 32 kann in diesem Fall mittels der Abschaltvorrichtung 30 automatisch wieder gelöscht werden, wenn der Wert da/dt wieder in einen Normalbereich zurückgekehrt ist. Diese Aktivierung kann aber auch gespeichert bleiben, bis sie vom Fahrer wieder aufgehoben wird.

Der Wert A kann seinerseits eine Funktion der Fahrzeuggeschwindigkeit sein, so dass bei hohen Geschwindigkeiten früher gewarnt wird, da dort die Bremswege länger sind. Mit dem Signal vom Glied 112 kann auch eine automatische Bremsung, oder eine Reduzierung der Kraftstoffzufuhr zum Motor, initiiert werden, oder eine Begrenzung der Motordrehzahl auf einen vorgegebenen Wert.

Naturgemäß sind im Rahmen der vorliegenden Erfindung vielfache Abwandlungen und Modifikationen möglich.

## Patentansprüche

1. Warnvorrichtung für ein Fahrzeug,
mit einer Warnblinkanlage (23) zum Betreiben der Blinkleuchten (10, 12) des Fahrzeugs mit der Frequenz dieser Warnblinkanlage (23),
ferner mit einer zusätzlichen Warnleuchte (14) sowie einem dieser zugeordneten Geber (32), welcher bei Vorliegen eines den Blinkleuchten (10, 12) von der Warnblinkanlage (23) zugeführten Signals dieses an die zusätzliche Warnleuchte (14) weiterleitet,
und mit einer der zusätzlichen Warnleuchte (14) zugeordneten, manuell aktivierbaren Abschaltvorrichtung (30; 30A), welche dazu ausgebildet ist, bei ihrer Betätigung die Stromzufuhr zur zusätzlichen Warnleuchte (14) zu deaktivieren,
und welche sich nach dem Ende der Zufuhr eines Signals von der Warnblinkanlage (23) zu den Blinkleuchten in einen Zustand zurückstellt, in dem bei einem erneuten Einschalten der Warnblinkanlage (23) erneut die Stromzufuhr zur zusätzlichen Warnleuchte (14) ermöglicht wird.

2. Warnvorrichtung nach Anspruch 1, bei welcher dem Geber (32) mindestens ein Sensor (36; 36') zugeordnet ist, mittels dessen der Geber (32) bei einer Gefahrensituation automatisch aktivierbar ist, um die zusätzliche Warnleuchte (14) mit einem impulsförmigen Signal, bevorzugt einem impulsförmigen Signal (38) erhöhter Frequenz, zu aktivieren,
und bei welcher die Abschaltvorrichtung (30; 30A) dazu ausgebildet ist, bei ihrer Betätigung diesen Geber (32) zu deaktivieren.

3. Warnvorrichtung nach Anspruch 2, bei welcher der Sensor (36') als auf dem Fahrzeug vorgesehener Abstandssensor (102, 104) ausgebildet ist, welcher dazu ausgebildet ist, den Abstand (a) zu einem anderen Fahrzeug (106) zu überwachen.

4. Warnvorrichtung nach Anspruch 3, bei welcher der Sensor (36') eine Vorrichtung (110, 112) aufweist, welche die zeitliche Änderung des vom Abstandssensor (102, 104) erfassten Abstands zu einem anderen Fahrzeug (106) ermittelt, und welche ab einem vorgegebenen Wert (A) dieser zeitlichen Änderung (da/dt) den Geber (32) aktiviert.

5. Warnvorrichtung für ein Fahrzeug,
mit einer Warnleuchte (14) und einem dieser zugeordneten Geber (32) zum Versorgen der Warnleuchte (14) mit Stromimpulsen, und mit einem auf dem Fahrzeug (100) vorgesehenen Abstandssensor (102, 104), welcher dazu ausgebildet ist, abhängig vom erfassten Abstand (a) des Fahrzeugs (100) zu einem anderen Fahrzeug (106) diesen Geber (32) zu aktivieren und/oder zu deaktivieren.

6. Warnvorrichtung nach Anspruch 5, bei welcher der Abstandssensor (102, 104) eine Vorrichtung (110, 112) aufweist, welche die zeitliche Änderung des vom Abstandssensor (102, 104) erfassten Abstands (a) ermittelt und ab einem vorgegebenen Wert (A) dieser zeitlichen Änderung (da/dt) den Geber (32) aktiviert.

7. Warnvorrichtung für ein Fahrzeug, welche aufweist:
Eine Warnblinkanlage (23) zum Betreiben der Blinkleuchten (10, 12) des Fahrzeugs mit ihrer Blinkfrequenz;
eine zusätzliche Warnleuchte (14) und einen dieser zugeordneten Geber (32), welcher bei Vorliegen eines den Blinkleuchten (10, 12) von der Warnblinkanlage (23) zugeführten Signals dieses an die zusätzliche Warnleuchte (14) weiterleitet, wobei der Geber (32) durch eine Gefahrensituation automatisch aktivierbar ist, um die zusätzliche Warnleuchte (14) mit einem impulsförmigen Signal, bevorzugt einem impulsförmigen Signal (38) höherer Frequenz, zu aktivieren,
eine selektiv aktivierbare Abschaltvorrichtung (30; 30A) für die zusätzliche Warnleuchte (14), welche Abschaltvorrichtung dazu ausgebildet ist, bei ihrer Aktivierung die Stromzufuhr zur zusätzlichen Warnleuchte (14) zu unterbrechen und/oder den Geber (32) für die zusätzliche Warnleuchte (14) zu deaktivieren.

8. Warnvorrichtung nach einem der vorhergehenden Ansprüche, bei welcher zur Stromversorgung der Abschaltvorrichtung (30; 30A) ein vom Geber (32) abgegebenes Signal (38) dient.

9. Warnvorrichtung nach Anspruch 8, bei welcher dieses vom Geber (32) abgegebene Signal (38) dazu dient, einen Speicherkonden sator (52) in der Abschaltvorrichtung (30; 30A) aufzuladen, welcher im geladenen Zustand zur Energieversorgung der Abschaltvorrichtung (30; 30A) dient.

10. Warnvorrichtung nach Anspruch 9, bei welcher die Spannung am Speicherkondensator dazu dient, ab Erreichen einer vorgegebenen Spannungshöhe an diesem Kondensator (52) über einen Transistor ein Schaltglied (62, 67) zu aktivieren, über welches ein vom Geber (32) kommendes Signal der zusätzlichen Warnleuchte (14) zuführbar ist.

11. Warnvorrichtung nach Anspruch 10, bei welcher parallel zur Steuerstrecke des Transistors ein Thyristor (76) geschaltet ist, welcher über ein selektiv betätigbares Schaltglied (40; 40T) einschaltbar ist, um diesen Transistor (62) nichtleitend zu machen und das Relais (68) abzuschalten, wobei bevorzugt das selektiv betätigbare Schaltglied (40; 40T) dazu ausgebildet ist, bei seiner Betätigung dem Geber (32) ein Abschaltsignal zuzuführen, und wobei ferner insbesondere die Abschaltvorrichtung in der Zuleitung zur zusätzlichen Warnleuchte (14) und in der Nähe des Fahrersitzes angeordnet ist.
